# EUROPEAN PATENT APPLICATION

(11) **EP 4 317 575 A1**
(43) Date of publication of application: **07.02.2024**
(21) Application number: 21934556.8
(22) Date of filing: 08.11.2021
(51) Int. Cl.: D06F 58/36

(54) **CONTROL METHOD, APPARATUS AND DEVICE, AND COMPUTER READABLE STORAGE MEDIUM**

(30) Priority: 29.03.2021 CN 202110336700
(71) Applicant: Wuxi Little Swan Electric Co., Ltd., Wuxi, Jiangsu 214028 (CN)
(72) Inventor: CUI, Yuexin, Wuxi, Jiangsu 214000 (CN); ZHOU, Cunling, Wuxi, Jiangsu 214000 (CN)
(74) Representative: Haseltine Lake Kempner LLP
(86) International application number: PCT/CN2021/129379
(87) International publication number: WO 2022/205920

(57) **Abstract**

A control method, apparatus and device and a computer readable storage medium, applied to a clothes treatment device. The method comprises: determining that the clothes treatment device (20) executes a clothes treatment process, and controlling the clothes treatment device (20) to operate in a preset mode, wherein the preset mode comprises a first operating mode, and the first operating mode is that a drying heater (23) of the clothes treatment device (20) is turned off, a drying fan (24) of the clothes treatment device (20) is turned off, a steam generator (25) of the clothes treatment device (20) is turned on to generate steam, and the steam enters a tub body (21) of the clothes treatment device (20) through a steam outlet (251) of the steam generator (25) via a drying tunnel (22) of the clothes treatment device (20).

## Description

### CROSS-REFERENCE TO RELATED APPLICATIONS

This application is filed based on and claims priority to Chinese Patent application No. 202110336700.8 filed on March 29, 2021 and entitled "CONTROL METHOD, APPARATUS AND DEVICE, AND COMPUTER READABLE STORAGE MEDIUM", the contents of which are hereby incorporated by reference in its entirety.

### TECHNICAL FIELD

The application relates to the technical field of automatic control, and in particular to a control method, a control apparatus, a control device, and a computer-readable storage medium.

### BACKGROUND

With the continuous improvement of living standards, people's requirements for clothing become higher and higher. Traditional water washing, dry cleaning and other clothes washing methods not only cannot completely remove dirt on the clothes, but also cause deformations of the clothes and worse and worse feeling of the clothes. The more the clothes are washed, the older the clothes are, which causes irreversible damage to the clothes.

Air washing is to introduce a gas with certain temperature, humidity and pressure into a clothes treatment device, so that fibers of the clothes may be stretched and elasticity of the fibers may be restored, to prevent deformations of the clothes and achieve clothes care. However, in the related art, air washing mostly uses methods of circulating hot air and spraying atomized water to achieve clothes care. Care effects on wrinkles of the clothes, shaping and other care effects are not apparent, and a user's degree of satisfaction is poor in terms of the user's experience.

### SUMMARY

In view of this, embodiments of the application provide a control method, a control apparatus, a control device, and a computer-readable storage medium.

An embodiment of the application provides a control method, the control method is applied to a clothes treatment device, and includes the following operations.

It is determined that the clothes treatment device performs a clothes treatment process, and the clothes treatment device is controlled to operate in a predetermined mode.

The predetermined mode includes a first operation mode, and the first operation mode includes: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator.

In some embodiments, the first operation mode may further include:
controlling the tub body to operate at a first beat; and
determining that an ON duration of the steam generator reaches a first duration, and controlling the steam generator to be turned off to stop generating the steam.

In some embodiments, the predetermined mode may further include a second operation mode.

The second operation mode may include: turning on the drying heater, turning on the drying fan, and turning off the steam generator.

In some embodiments, the second operation mode may further include:
controlling the tub body to operate at a second beat which is stronger than the first beat.

In some embodiments, the predetermined mode may further include a third operation mode, and the third operation mode may include: turning on the drying heater, turning on the drying fan, turning on the steam generator to generate steam, and heating, by the drying heater, the steam to form superheated steam after the steam enters the drying tunnel via the steam outlet, and promoting, by the drying fan, the superheated steam to enter the tub body.

In some embodiments, the method may further include the following operations.

The clothes treatment device is controlled to operate alternately in the second operation mode and the third operation mode.

In some embodiments, the method may further include the following operations.

The clothes treatment device is controlled to operate in the second operation mode, after determining that the clothes treatment device operates alternately in the second operation mode and the third operation mode for a predetermined number of times.

In some embodiments, the predetermined mode may further include a fourth operation mode, and the fourth operation mode may include: turning off the drying heater, turning on the drying fan, and turning off the steam generator.

The fourth operation mode may further include: turning on a condensate valve of the clothes treatment device.

An embodiment of the application provides a control apparatus, the control apparatus is applied to a clothes treatment device, and includes a control module.

The control module is configured to determine that the clothes treatment device performs a clothes treatment process, and control the clothes treatment device to operate in a predetermined mode.

The predetermined mode includes a first operation mode, and the first operation mode includes: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator.

An embodiment of the application provides a control device, the control device includes a memory and a processor.

The memory is configured to store executable instructions.

The processor is configured to implement operations of the above control method when the processor executes the executable instructions stored in the memory.

An embodiment of the application provides a computer-readable storage medium, having stored thereon computer-executable instructions. The computer-executable instructions are configured to perform operations of the above control method.

The embodiments of the application provide a control method, a control apparatus, a control device, and a computer-readable storage medium, which are applied to a clothes treatment device. The method includes the following operations. It is determined that the clothes treatment device performs a clothes treatment process, and the clothes treatment device is controlled to operate in a predetermined mode. The predetermined mode includes a first operation mode, and the first operation mode includes: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator. In this way, the steam generated by the steam generator may implement care functions such as dust removal, wrinkle removal, deodorization, sterilization and other care functions of the clothes in the tub body, which may effectively improve clothes shaping effect; furthermore, temperature of the steam generator may quickly increase by preheating the steam generator, to prepare for subsequent usage of the steam generator, thereby improving clothes treatment efficiency.

### BRIEF DESCRIPTION OF THE DRAWINGS

In the drawings (which are not necessarily drawn to scale), similar reference numerals may describe similar components in different views. The drawings generally illustrate various embodiments discussed here by way of example rather than limitation.
FIG. 1 is a schematic flowchart of implementation of a control method according to an embodiment of the application.
FIG. 2 is a schematic diagram of compositional structures of a clothes treatment device according to an embodiment of the application.
FIG. 3 is a schematic flowchart of another implementation of a control method according to an embodiment of the application.
FIG. 4 is a schematic flowchart of implementation of a control method of a light dry cleaning program according to an embodiment of the application.
FIG. 5 is a schematic diagram of compositional structures of a control apparatus according to an embodiment of the application.
FIG. 6 is a schematic diagram of compositional structures of a control device according to an embodiment of the application.

### DETAILED DESCRIPTION

In order to make the purpose, technical solutions and advantages of the application clearer, the application will be described in further detail below with reference to the drawings. The described embodiments should not be considered as limitation to the application. All other embodiments obtained by those of ordinary skill in the art without paying any creative work fall within the scope of protection of the application.

In the following descriptions, reference is made to "some embodiments", which describe a subset of all possible embodiments; however, it may be understood that "some embodiments" may be the same subset or different subsets of all possible embodiments, and may be combined with each other without conflict.

In the following descriptions, reference is made to terms "first\second\third", which are only intended to distinguish similar objects, and do not represent a specific order for the objects. It may be understood that specific orders or sequences of "first\second\third" may be interchanged if allowable, to enable the embodiments of the application described here to be implemented in orders other than those illustrated or described here.

Unless stated otherwise, all technical and scientific terms used here have the same meaning as usually understood by technicians in the technical field to which the application belongs. The terms used here are only for the purpose of describing the embodiments of the application, and are not intended to limit the application.

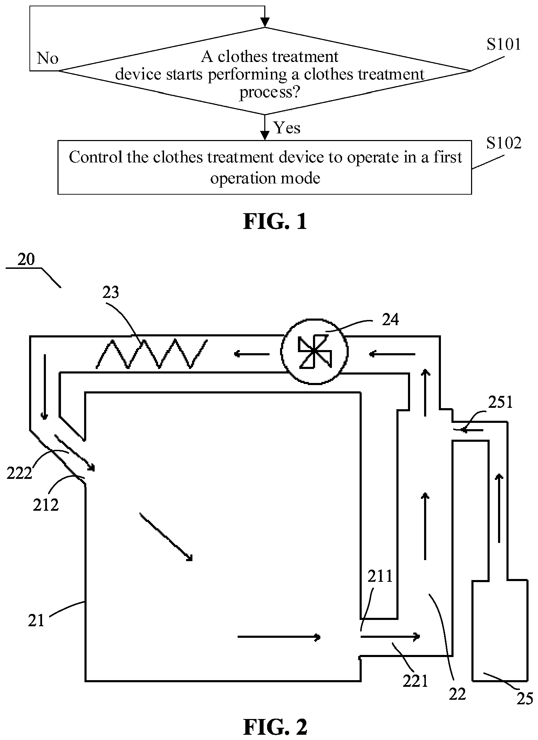

Based on clothes treatment devices in related art, such as a dryer, a dishwasher, a dry cleaning machine, a washing-drying integrated machine, a clothes care machine, and other household appliances with air washing function, they have a single operation mode of air washing and cannot achieve flexible care, resulting in a problem of poor care effect. An embodiment of the application provides a control method applied to a clothes treatment device. The method provided in the embodiment of the application may be implemented by a computer program, and when the computer program is executed, each operation of the control method provided in the embodiment of the application is completed. In some embodiments, the computer program may be executed by a processor in a control device. FIG. 1 is a schematic flowchart of implementation of a control method according to an embodiment of the application. As shown in FIG. 1, the control method includes the following operations S101 and S102.

At S101, it is determined whether a clothes treatment device starts performing a clothes treatment process.

The clothes treatment device here may be a dryer, a dishwasher, a dry cleaning machine, a washing-drying integrated machine, a clothes care machine, and other household appliances with air washing function. Air washing is to introduce a gas with certain temperature, humidity and pressure into the clothes treatment device; use technologies such as a uniform air structure, micro-liquid phase vaporization, inner tub profiling and other technologies based on aerodynamic analysis, to implement nondestructive care of micro-vapor molecules on fibers of the clothes, and implement sterilization, mite removal, color protection, leveling, fluffy care, protection and other care of the clothes.

A method of air washing in the related art is to introduce hot air into a tub body of the clothes treatment device, and use air with high temperature to care the clothes in the tub body. However, when only air with high temperature is used, leveling effect of the clothes is not apparent. Another method of air washing in the related art is to introduce hot air into the tub body, while use a micro-bubble generation device to generate atomized water, and spray the atomized water onto the clothes in the tub body. Although wrinkles of the clothes may be removed to a certain extent, this method is not suitable for delicate fabrics which are sensitive to moisture; furthermore, since the atomized water is directly sprayed, it may cause the clothes after care to have high humidity, and care effects such as wrinkle removal, shaping and other care effects are still poor.

An embodiment of the application provides a clothes treatment device which achieves an air washing function by using steam. FIG. 2 is a schematic diagram of compositional structures of a clothes treatment device according to an embodiment of the application. As shown in FIG. 2, the clothes treatment device 20 includes a tub body 21, a drying tunnel 22, a drying heater 23, a drying fan 24, a steam generator 25, and a condensate valve (not shown in the figure).

The tub body 21 includes an air outlet 211 and an air inlet 212. In some implementations, the tub body may include a water tub and a washing tub, and at this time, the air outlet 211 and the air inlet 212 are arranged on the water tub; in some implementations, the tub body includes a single tub, and at this time, the air outlet 211 and the air inlet 212 are arranged on the tub.

The drying tunnel 22 includes a drying tunnel inlet 221 and a drying tunnel outlet 222. The drying tunnel inlet 221 is communicated with the air outlet 211, and the drying tunnel outlet 222 is communicated with the air inlet 212, to form an air circulation channel. Gas in the drying tunnel enters the tub body 21 by passing through the drying tunnel outlet 222 and the air inlet 212 to contact processing objects (such as clothes) in the tub body 21, and then enters the drying tunnel by passing through the air outlet 211 and the drying tunnel inlet 221, thereby forming a cycle.

The drying heater 23 is arranged in the drying tunnel 22 and is configured to heat the gas flowing through the drying tunnel 22; the drying fan 24 is arranged between the drying tunnel inlet 221 and the drying heater 23; the steam generator 25 includes a steam outlet 251, and the steam outlet 251 is arranged between the drying tunnel inlet 221 and the drying fan 24. The steam generator here is a device which uses heat energy generated by the heater to vaporize water into steam.

The condensate valve is communicated with a condensate pipe (not shown in the figure) and the drying tunnel 22, to condense air passing through the drying tunnel 22.

When the user requires air washing to be performed on processing objects (such as clothes, shoes, bags, etc.), the user puts the processing objects into the tub body of the clothing treatment device, and turns on power supply of the clothes treatment device, and at this time, the clothes treatment device is in a standby state. A start-up instruction is triggered when the user performs a start-up operation. In response to the received start-up instruction, the clothes treatment device starts performing the clothes treatment process, and the process proceeds to S102; and when the clothes treatment device does not receive the start-up instruction, the clothes treatment device continues to maintain the standby state.

In the embodiment of the application, the user may perform the start-up operation on a control panel of the clothes treatment device; or, may perform the start-up operation through remote control, for example, remotely perform the start-up operation on a terminal installed with a control program of the clothes treatment device, to control the clothes treatment device to start performing the clothes treatment process. Unless specified otherwise, the processing objects are described below by taking the clothes as an example.

At S102, the clothes treatment device is controlled to operate in a first operation mode.

When it is determined that the clothes treatment device performs the clothes treatment process, the clothes treatment device is controlled to operate in a predetermined mode. In the embodiment of the application, the predetermined mode includes a first operation mode, and the first operation mode includes: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator.

With reference to FIG. 2, in the embodiment of the application, when the clothes treatment device starts performing the clothes treatment process, the clothes treatment device operates in the first operation mode, that is, the steam generator is turned on, and the drying fan and the drying heater are turned off. Temperature of the steam generator gradually increases. Before the temperature increases to a preset temperature upper limit threshold, water is not present in the steam generator and steam is not generated, to prevent temperature of the steam generator from decreasing or increasing slowly due to vaporization and heat absorption. When temperature of the steam generator reaches the temperature upper limit threshold, water is introduced into the steam generator and is vaporized into steam through the steam generator with high temperature, thereby generating steam. The generated steam enters the drying tunnel through the steam outlet and enters the tub body along the drying tunnel. In this way, temperature of the steam generator may quickly increase, and clothes care efficiency may be improved.

The control method provided in the embodiment of the application is applied to a clothes treatment device, and includes the following operations. It is determined that the clothes treatment device performs a clothes treatment process, and the clothes treatment device is controlled to operate in a predetermined mode. The predetermined mode includes a first operation mode, and the first operation mode includes: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator. The steam generated by the steam generator may implement care functions such as dust removal, wrinkle removal, deodorization, sterilization and other care functions of the clothes in the tub body, which may effectively improve clothes shaping effect; furthermore, temperature of the steam generator may quickly increase by preheating the steam generator, so that a large volume of steam may be quickly introduced into the tub body, and temperature in the tub body may quickly increase, to prepare for subsequent usage of the steam generator, thereby improving the clothes care efficiency; furthermore, the drying fan is turned off during generation of steam, the steam enters the tub body through the drying tunnel, and part of the steam may accumulate in the drying tunnel, which will lay a foundation for the steam to evenly wet the clothes later.

In some embodiments, the first operation mode further includes: the tub body operating at a first beat. When the clothes treatment device is controlled to operate in the first operation mode at S102, the process may further include the following operation S1021.

At S1021, the tub body is controlled to operate at a first beat.

In some embodiments, the tub body operating at the first beat may mean that the tub body operates at a certain rotation-to-stop ratio, that is, the tub body operates at a certain rotational speed for a certain duration and then stops for a certain duration, and then continues to operate with this regularity. For example, the tub body periodically operates at a first rotational speed for P1 seconds and stops for Q1 seconds, here, P1 and Q1 are positive integers. When the tub body just starts rotation, the tub body is controlled to rotate at a small rotation-to-stop ratio, which may play a role of evenly and quickly dispersing the clothes, and prevent the clothes in the tub body from tangling.

In some other embodiments, the tub body operating at the first beat may mean that the tub body operates at a certain rotational speed continuously.

In the embodiment of the application, the rotational speed of the tub body when it operates at the first beat, i.e., the above first rotational speed, may be determined by the processing objects, for example, types of the processing objects (such as clothes, shoes, bags), types of fabrics (such as conventional fabrics, cotton clothes, fine fabrics, silks), etc.

After rotation of the tub body, the clothes in the tub body start rotation under an action of centrifugal force, which plays a role of fully throwing and dispersing the clothes. The clothes in the tub body are fully stretched, which helps to remove wrinkles on the clothes; furthermore, the clothes may uniformly contact with steam in case that the clothes are fully stretched, which may further improve clothes care effects such as dust removal, wrinkle removal, deodorization, sterilization and other clothes care effects.

In some embodiments, the above control method may further include an operation S103 after S102, to determine whether the first operation mode finishes.

At S103, it is determined whether an ON duration of the steam generator reaches a first duration.

When the steam generator is just turned on, temperature of the steam generator is low, and the steam generator cannot vaporize water into steam. After the steam generator is turned on for a certain period of time and is heated to reach a certain temperature, the steam generator may vaporize water into steam. On the above basis, in the embodiment of the application, the steam generator does not generate steam in a short period of time after the steam generator is turned on, and as temperature of the steam generator increases, a generated steam volume starts to increase gradually. When the ON duration of the steam generator reaches the first duration, it is considered that steam introduced into the tub body has a sufficient volume. At this time, when steam continues to be generated, excessive steam may wet the clothes and affect the clothes care effect; furthermore, the excessive steam may cause air pressure in the tub body to increase, and excessive air pressure may cause air leakage or explosion of the tub body. In order to prevent excessive steam in the tub body, the ON duration of the steam generator is detected. When the ON duration of the steam generator reaches the first duration, it is considered that the steam volume is sufficient, and the process proceeds to S104 at this time; when the ON duration of the steam generator has not reached the first duration, the process returns to S102 to continue to generate steam.

At S104, the steam generator is controlled to be turned off, to stop generating the steam.

When duration of the clothes treatment device operating in the first operation mode reaches the first duration, the clothes treatment device is controlled to finish operating in the first operation mode, that is, when the ON duration of the steam generator reaches the first duration, the steam generator is controlled to be turned off. At this time, the steam generator does not generate steam any more, and an appropriate volume of steam may not wet the clothes in the tub body, which may ensure the clothes care effect, and after generation of the steam is stopped, air pressure in the tub body may be maintained within a normal range.

According to the control method provided in the embodiment of the application, when the clothes treatment device operates in the first operation mode, the drying heater is turned off, the drying fan is turned off, the steam generator is turned on to generate steam, and the tub body operates in the first operation mode, so that the clothes in the tub body start rotation under an action of centrifugal force, which plays a role of throwing and dispersing the clothes. The clothes in the tub body are stretched, which helps to remove wrinkles on the clothes; furthermore, the clothes may uniformly contact with steam in case that the clothes are stretched, which may further improve the clothes care effects such as dust removal, wrinkle removal, deodorization, sterilization and other clothes care effects. When the ON duration of the steam generator reaches the first duration, the steam generator is turned off to stop generating the steam, which may maintain air pressure in the tub body within a normal range, prevent the steam from wetting the clothes in the tub body, and ensure the clothes care effect.

In some embodiments, the above control method may further include an operation S105 after S104.

At S105, the clothes treatment device is controlled to operate in a second operation mode.

It is determined that the clothes treatment device performs a clothes treatment process, and the clothes treatment device is controlled to operate in a predetermined mode. In the embodiment of the application, in addition to the first operation mode, the predetermined mode further includes a second operation mode. The second operation mode includes: turning on the drying heater, turning on the drying fan, and turning off the steam generator.

When the clothes treatment device operates in the first operation mode, steam generated by the steam generator enters the tub body slowly by passing through the drying tunnel via the steam outlet of the steam generator. When the clothes treatment device is controlled to operate in the second operation mode, the drying fan is controlled to be turned on, to quickly introduce steam accumulated in the drying tunnel into the tub body, so that the steam may quickly wrap the clothes; by turning on the drying heater, on one hand, moisture in the tub body may not be too large, while temperature in the tub may increase to achieve clothes ironing effect.

In the embodiment of the application, a steam generation system operates in the second operation mode, that is, the steam generator is turned off, and the drying fan and the drying heater are turned on. The steam generator does not generate steam any more, and the drying heater heats the gas flowing through the drying tunnel. The heated gas is quickly introduced into the tub body through the drying fan, which may increase temperature in the tub body, maintain the gas in the tub body at a high temperature, and achieve the clothes ironing effect; furthermore, humidity brought by the steam may also be reduced, temperature and humidity in the tub are adjusted, thereby effectively improving the clothes care effect.

In some embodiments, the second operation mode further includes: the tub body operating at a second beat. When the clothes treatment device is controlled to operate in the second operation mode at S105, the process may further include the following operation S1051.

At S1051, the tub body is controlled to operate at a second beat.

In some embodiments, the tub body operating at the second beat may mean that the tub body operates at a certain rotation-to-stop ratio, that is, the tub body operates at a certain rotational speed for a certain duration and then stops for a certain duration, and then continues to operate with this regularity. For example, the tub body periodically operates at a second rotational speed for P2 seconds and stops for Q2 seconds, here, P2 and Q2 are positive integers. In the embodiment of the application, the second beat is stronger than the first beat, which may mean that the rotational speed of the tub body at the second beat is greater than the rotational speed of the tub body at the first beat, that is, the second rotational speed is greater than the first rotational speed; or may mean that a second rotation-to-stop ratio P2:Q2 is greater than a first rotation-to-stop ratio P1:Q1; or may mean that the second rotational speed is greater than the first rotational speed, and the second rotation-to-stop ratio P2:Q2 is greater than the first rotation-to-stop ratio P1:Q1. After controlling the tub body to operation at the first beat for the first duration, when the clothes treatment device operates in the second operation mode, the tub body is controlled to operate at the second beat, and the tub body operates at the second beat which is stronger than the first beat, so that the clothes in the tub body rotate in a state of almost affixing to the tub body, which may make the clothes stretched and spread more fully in the tub body, and further improve the clothes shaping effect, thereby improving the clothes care effect.

In some other embodiments, the tub body operating at the second beat may mean that the tub body operates at a certain rotational speed continuously. At this time, the second beat stronger than the first beat may be understood as: the rotational speed of the tub body at the second beat is greater than the rotational speed of the tub body at the first beat.

In the embodiment of the application, the rotational speed of the tub body when it operates at the second beat, i.e., the above second rotational speed, may be determined by the processing objects, for example, types of the processing objects (such as clothes, shoes, bags), types of fabrics (such as conventional fabrics, cotton clothes, fine fabrics, silks), etc.

In some embodiments, the above control method may further include the following operation S106 after S105.

At S106, the clothes treatment device is controlled to operate in a third operation mode.

It is determined that the clothes treatment device performs a clothes treatment process, and the clothes treatment device is controlled to operate in a predetermined mode. In the embodiment of the application, the clothes treatment device continues to operate in the third operation mode after operating in the second operation mode. The third operation mode includes: turning on the drying heater, turning on the drying fan, turning on the steam generator to generate steam, and heating, by the drying heater, the steam to form superheated steam after the steam enters the drying tunnel via the steam outlet, and promoting, by the drying fan, the superheated steam to enter the tub body.

In the embodiment of the application, the steam generation system operates in the third operation mode, that is, the steam generator is turned on, the drying fan is turned on, and the drying heater is turned on. The steam generator generates steam again. Since the steam generator is preheated, steam may be generated immediately when the steam generator is started again, so that a large volume of steam may be quickly introduced into the tub body, which may quickly increase temperature in the tub body and improve the clothes care efficiency. The steam generated by the steam generator may implement care functions such as dust removal, wrinkle removal, deodorization, sterilization and other care functions of the clothes in the tub body, which may effectively improve the clothes shaping effect. Furthermore, the drying heater reheats steam in the drying tunnel, and the generated superheated steam may increase temperature in the tub while adjust temperature and humidity in the tub. The superheated steam is quickly introduced into the tub body by the drying fan, so that the steam may quickly and evenly contact the clothes, and the gas in the tub body is maintained at a high temperature to prevent condensation of the steam, thereby reducing humidity in the tub body, ensuring that the clothes may not be wetted, and effectively improving the clothes care effect.

In some embodiments, the following operation S107 is continued after S106.

At S107, it is determined whether a number of times for the clothes treatment device operating alternately in the second operation mode and the third operation mode reaches a predetermined number of times.

When it is determined that the number of times for the clothes treatment device operating alternately in the second operation mode and the third operation mode reaches the predetermined number of times, the process proceeds to S108; when the number of times for the clothes treatment device operating alternately in the second operation mode and the third operation mode does not reach the predetermined number of times, operating alternately in the second operation mode and the third operation mode is continued, and the process returns to S105. The predetermined number of times here may be determined according to materials of the clothes. In case of easy-to-process clothes (such as clothes made of silk materials which are easy to dry), the predetermined number of times is set to a small value, such as 1 or 2; in case of difficult-to-process clothes (such as clothes made of cotton materials which are difficult to dry), the predetermined number of times is set to a large value, such as 4 or 5.

In some other embodiments, it may be determined whether the alternate operation finishes according to a duration when the clothes treatment device operates alternately in the second operation mode and the third operation mode, and at this time, S107 may be replaced by the following operation S107'.

At S107', it is determined whether a duration when the clothes treatment device operates alternately in the second operation mode and the third operation mode reaches a predetermined duration.

When it is determined that the duration when the clothes treatment device operates alternately in the second operation mode and the third operation mode reaches the predetermined duration, the process proceeds to S108; when the duration when the clothes treatment device operates alternately in the second operation mode and the third operation mode does not reach the predetermined duration, operating alternately in the second operation mode and the third operation mode is continued, and the process returns to S105. The predetermined duration here may be determined according to materials of the clothes. In case of easy-to-process clothes (such as clothes made of silk materials which are easy to dry), the predetermined duration is set to a small value, such as 10 min (minutes); in case of difficult-to-process clothes (such as clothes made of cotton materials which are difficult to dry), the predetermined number of times is set to a large value, such as 15 min.

It should be noted that the clothes treatment device operates alternately in the second operation mode and the third operation mode, which may mean that the clothes treatment device operates in a form of any combination of the second operation mode and the third operation mode, for example, operates alternately in 'the second operation mode→the second operation mode→the third operation mode'; or, operates alternately in 'the second operation mode→the second operation mode→the third operation mode→the second operation mode'; or, operates alternately in 'the second operation mode→the third operation mode'; or, operates alternately in 'the third mode→the second mode'. Any combination falls within the scope of protection of the embodiment of the application, as long as alternate operation of the second operation mode and the third operation mode is satisfied.

According to the method provided in the embodiment of the application, when the clothes treatment device operates in the second operation mode, the steam generator does not generate steam; when the clothes treatment device operates in the third operation mode, the steam generator generates steam. These operations are circulated in this way for many times, therefore not only the steam evenly contacts the clothes to further improve the clothes care effects such as dust removal, wrinkle removal, deodorization, sterilization and other clothes care effects, but also air pressure in the tub body may be maintained within a normal range by repeatedly turning on and off the steam generator, to prevent air leakage caused by excessive air pressure in the tub body; furthermore, the drying heater is always turned on, so that the superheated steam is introduced into the tub body, which may prevent the steam from wetting the clothes in the tub body, and ensure the clothes care effect.

At S108, the clothes treatment device is controlled to operate in the second operation mode, after determining that the clothes treatment device operates alternately in the second operation mode and the third operation mode for a predetermined number of times.

The second operation mode includes: turning on the drying heater, turning on the drying fan, and turning off the steam generator.

After the clothes treatment device operating alternately in the second operation mode and the third operation mode finishes, the drying heater is turned on again to heat the gas in the drying tunnel, and hot air circulation further reduces moisture of the tub body and humidity of the clothes, to achieve dehumidification treatment; furthermore, temperature in the tub may increase to further optimize the clothes ironing effect, thereby improving the clothes care effect.

In some embodiments, after S108 finishes, temperature reduction and cooling treatment of the clothes in the tub body may be continued, and the cooling treatment may be implemented by the following operation S109.

At S109, the clothes treatment device is controlled to operate in a fourth operation mode.

It is determined that the clothes treatment device performs a clothes treatment process, and the clothes treatment device is controlled to operate in a predetermined mode. In the embodiment of the application, after S108 finishes, the clothes treatment device is controlled to continue to operate in the fourth operation mode. The fourth operation mode includes: turning off the drying heater, turning on the drying fan, and turning off the steam generator.

Since the drying heater is always turned on in processes of processing and dehumidifying the clothes from S105 to S108, temperature in the tub body is high. At this time, when a door of the clothes treatment device is directly opened, the run-out hot air or clothes with high temperature may cause damage to the user. On the above basis, after dehumidification finishes, the drying heater is turned off to stop continuing to heat air in the tub body; furthermore, the drying fan is kept to be turned on, to blow air to the clothes with high temperature, thereby reducing temperature of the clothes.

In some embodiments, the fourth operation mode further includes turning on a condensate valve of the clothes treatment device.

In order to reduce temperature in the tub body faster, the condensate valve is controlled to be turned on while the drying fan is turned on, to use the condensate valve to cool hot air in the drying tunnel so as to generate cold air, and then use the drying fan to quickly introduce the cold air into the tub body, which may quickly reduce temperature in the tub body and shorten clothes cooling time.

When temperature of the clothes in the tub body is less than or equal to a preset temperature threshold, or when it is determined that an ON duration of the condensate valve reaches a preset duration threshold, it is considered that temperature in the tub body is reduced to a low temperature, and when the door of the clothes treatment device is opened at this time, hot steam may not run out, and temperature of the clothes in the tub body may not damage the user. At this time, it is determined that cooling is over, and the clothes treatment device is controlled to finish operations.

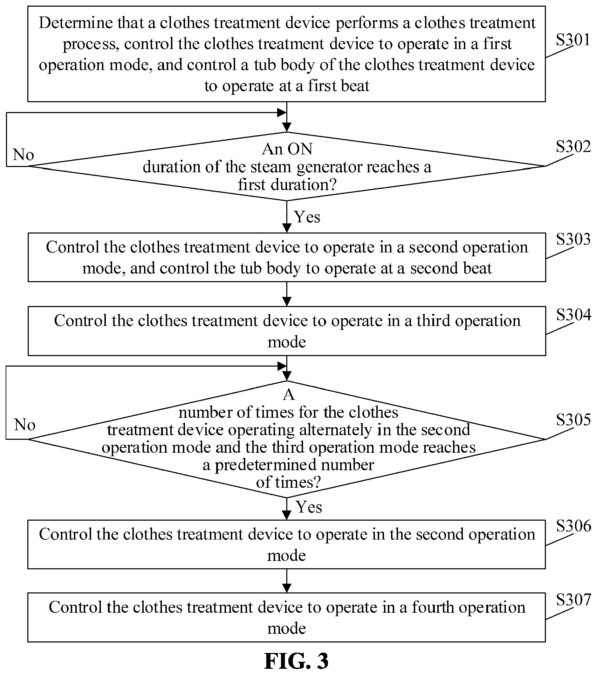

Based on the embodiment shown in FIG. 1, an embodiment of the application further provides a control method, and FIG. 3 is a schematic flowchart of another implementation of a control method according to an embodiment of the application. As shown in FIG. 3, the control method includes the following operations S301 to S307.

At S301, it is determined that a clothes treatment device performs a clothes treatment process, the clothes treatment device is controlled to operate in a first operation mode, and a tub body of the clothes treatment device is controlled to operate at a first beat.

The first operation mode includes: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator.

In some embodiments, the first beat may include a first rotational speed and a first rotation-to-stop ratio. The tub body operating at the first beat may mean that the tub body operates at the first rotational speed and the first rotation-to-stop ratio, that is, the tub body operates at a certain rotational speed for a certain duration and then stops for a certain duration, and then continues to operate with this regularity. In some other embodiments, the first beat may include only the first rotational speed, and at this time, the tub body operates continuously at the first rotational speed. For example, the tub body operates continuously at 30 rpm.

At S302, it is determined whether an ON duration of the steam generator reaches a first duration.

When the ON duration of the steam generator reaches the first duration, it is considered that preheating of the steam generator finishes, and the process proceeds to S303 at this time; when the ON duration of the steam generator does not reach the first duration, S301 is continued.

Here, the first duration may be set as 2.5 min.

At S303, the clothes treatment device is controlled to operate in a second operation mode, and the tub body is controlled to operate at a second beat.

The second operation mode includes: turning on the drying heater, turning on the drying fan, and turning off the steam generator. In a stage of the clothes treatment device operating in the second operation mode, the tub body operates at the second beat, and the second beat is stronger than the first beat.

In some embodiments, the second beat may include a second rotational speed and a second rotation-to-stop ratio. At this time, the second beat stronger than the first beat may mean that the second rotational speed is greater than the first rotational speed, or the second rotation-to-stop ratio is greater than the first rotation-to-stop ratio. The tub body operating at the second beat may mean that the tub body operates at the second rotational speed and the second rotation-to-stop ratio, that is, the tub body operates at the second rotational speed for a certain duration and then stops for a certain duration, and then continues to operate with this regularity. After operating for a period of time (e.g., 1 min), the process proceeds to S304.

In some other embodiments, the second beat may include only the second rotational speed, and at this time, the tub body operates continuously at the second rotational speed. At this time, the second beat stronger than the first beat may be understood as: the rotational speed of the tub body at the second beat is greater than the rotational speed of the tub body at the first beat, that is, the second rotational speed is greater than the first rotational speed. The tub body operates for a period of time (e.g., 1 min), then the process proceeds to S304.

After preheating of the steam generator finishes, when the clothes treatment device is controlled to operate in the second operation mode, since temperature in the tub body is low in the preheating stage, steam with high temperature may condense when it encounters air with low temperature. In order to reduce humidity in the tub body, the clothes treatment device may be controlled to operate in the second operation mode for a long period of time at this time, to use the drying heater to heat steam generated when the steam generator is preheated for a long period of time, which on one hand, may make moisture in the tub body not too large, while may increase temperature in the tub and achieve the clothes ironing effect. When the clothes treatment device operates in the second operation mode, the drying fan is turned on to quickly introduce steam accumulated in the drying tunnel into the tub body, so that the steam may quickly wrap the clothes, to improve clothes treatment effect.

At S304, the clothes treatment device is controlled to operate in a third operation mode.

The third operation mode includes: turning on the drying heater, turning on the drying fan, turning on the steam generator to generate steam, and heating, by the drying heater, the steam to form superheated steam after the steam enters the drying tunnel via the steam outlet, and promoting, by the drying fan, the superheated steam to enter the tub body.

In the embodiment of the application, the steam generation system operates in the third operation mode, that is, the steam generator is turned on, the drying fan is turned on, and the drying heater is turned on. The steam generator generates steam again. Since the steam generator is preheated, steam may be generated immediately when the steam generator is started again, so that a large volume of steam may be quickly introduced into the tub body, which may quickly increase temperature in the tub body and improve the clothes care efficiency. The steam generated by the steam generator may implement care functions such as dust removal, wrinkle removal, deodorization, sterilization and other care functions of the clothes in the tub body, which may effectively improve the clothes shaping effect. Furthermore, the drying heater reheats steam in the drying tunnel, and the generated superheated steam may increase temperature in the tub while adjust humidity in the tub. The superheated steam is quickly introduced into the tub body by the drying fan, so that the steam may quickly and evenly contact the clothes, and the gas in the tub body is maintained at a high temperature to prevent condensation of the steam, thereby reducing humidity in the tub body, ensuring that the clothes may not be wetted, and effectively improving the clothes care effect.

At S305, it is determined whether a number of times for the clothes treatment device operating alternately in the second operation mode and the third operation mode reaches a predetermined number of times.

When the number of times for the clothes treatment device operating alternately in the second operation mode and the third operation mode reaches the predetermined number of times, it indicates that the clothes treatment finishes, the process proceeds to S306 at this time to dehumidify the clothes; when the number of times for the clothes treatment device operating alternately in the second operation mode and the third operation mode does not reach the predetermined number of times, it indicates that the clothes treatment does not finish, the process returns to S303 to continue the operation of operating alternately in the second operation mode and the third operation mode.

It should be noted here that when the clothes treatment device operates in the second operation mode for the first time, which occurs after preheating of the steam generator finishes, since temperature in the tub body is low in the preheating stage, steam with high temperature may condense when it encounters air with low temperature. In order to reduce humidity in the tub body, the clothes treatment device may be controlled to operate in the second operation mode for a long period of time at this time, for example, operate for 2 min. However, after the clothes treatment device operates in the third operation mode, temperature in the tub body is already high after experiencing stages of the second operation mode and the third operation mode. At this time, when the clothes treatment device operates in the second operation mode again, it is unnecessary to control the clothes treatment device to operate in the second operation mode for a long period of time again, for example, operate for 1 min. By shortening an OFF duration of the steam generator, the clothes treatment duration may be shortened and the clothes treatment efficiency may be improved.

It should be noted that the clothes treatment device operates alternately in the second operation mode and the third operation mode, which may mean that the clothes treatment device operates in a form of any combination of the second operation mode and the third operation mode, for example, operates alternately in 'the second operation mode→the second operation mode→the third operation mode'; or, operates alternately in 'the second operation mode→the second operation mode→the third operation mode→the second operation mode'; or, operates alternately in 'the second operation mode→the third operation mode'; or, operates alternately in 'the third operation mode → the second operation mode'. Any combination falls within the scope of protection of the embodiment of the application, as long as alternate operation of the second operation mode and the third operation mode is satisfied.

According to the method provided in the embodiment of the application, when the clothes treatment device operates in the second operation mode, the steam generator does not generate steam; when the clothes treatment device operates in the third operation mode, the steam generator generates steam. This cycle is repeated many times, therefore not only the steam evenly contacts the clothes to further improve the clothes care effects such as dust removal, wrinkle removal, deodorization, sterilization and other clothes care effects, but also air pressure in the tub body may be maintained within a normal range by repeatedly turning on and off the steam generator, to prevent air leakage caused by excessive air pressure in the tub body; furthermore, the drying heater is always turned on, so that the superheated steam is introduced into the tub body, which may prevent the steam from wetting the clothes in the tub body, and ensure the clothes care effect.

At S306, the clothes treatment device is controlled to operate in the second operation mode.

After the clothes treatment device operating alternately in the second operation mode and the third operation mode finishes, the drying heater is turned on again to heat the gas in the drying tunnel, and hot air circulation further reduces moisture of the tub body and humidity of the clothes, to achieve dehumidification treatment; furthermore, temperature in the tub may increase to further optimize the clothes ironing effect, thereby improving the clothes care effect.

At S307, the clothes treatment device is controlled to operate in a fourth operation mode.

The fourth operation mode includes: turning off the drying heater, turning on the drying fan, turning off the steam generator, and turning on a condensate valve of the clothes treatment device.

Since the drying heater is always turned on in the above processes of processing and dehumidifying the clothes, temperature in the tub body is high. At this time, when a door of the clothes treatment device is directly opened, the run-out hot air or clothes with high temperature may cause damage to the user. On the above basis, after dehumidification finishes, the drying heater is turned off to stop continuing to heat air in the tub body; the condensate valve is controlled to be turned on while the drying fan is turned on, to use the condensate valve to cool hot air in the drying tunnel so as to generate cold air, and then use the drying fan to quickly introduce the cold air into the tub body, which may quickly reduce temperature in the tub body and shorten the clothes cooling time.

In the embodiment of the application, it is determined that the clothes treatment device performs the clothes treatment process, the clothes treatment device is controlled to operate in the first operation mode, and the tub body of the clothes treatment device is controlled to operate at the first beat; temperature of the steam generator may quickly increase by preheating the steam generator, so that a large volume of steam may be quickly introduced into the tub body, and temperature in the tub body may quickly increase, to improve the clothes care efficiency. After preheating finishes, the clothes processing device is controlled to operate in the second operation mode, and the tub body is controlled to operate at the second beat, so that humidity in the tub may be adjusted, and the superheated steam is quickly introduced into the tub body by the drying fan, so that the steam may quickly and evenly contact the clothes, and the gas in the tub body is maintained at a high temperature to prevent condensation of the steam, thereby reducing humidity in the tub body, ensuring that the clothes may not be wetted, and effectively improving the clothes care effect. The tub body is controlled to operate alternately in the third operation mode and the second operation mode, not only the steam evenly contacts the clothes to further improve the clothes care effects such as dust removal, wrinkle removal, deodorization, sterilization and other clothes care effects, but also air pressure in the tub body may be maintained within a normal range by repeatedly turning on and off the steam generator, to prevent air leakage caused by excessive air pressure in the tub body; furthermore, the drying heater is always turned on, so that the superheated steam is introduced into the tub body, which may prevent the steam from wetting the clothes in the tub body, and ensure the clothes care effect. After the clothes treatment device operating alternately in the second operation mode and the third operation mode finishes, the clothes treatment device is controlled to operate in the second operation mode again, which may further reduce moisture of the tub body and reduce humidity of the clothes, to achieve dehumidification treatment; furthermore, may increase temperature in the tub and further optimize the clothes ironing effect, thereby improving the clothes care effect. Finally, the clothes treatment device is controlled to operate in the fourth operation mode, which may quickly reduce temperature in the tub body and shorten the clothes cooling time.

An exemplary application of the embodiment of the application in an actual application scenario will be described below.

At present, air washing is implemented by hot air circulation or spraying some atomized water, which has poor clothes care effects, and cannot achieve real ironing and other care effects. Moreover, beat of air washing is relatively simple, and the same beat is used in different types of fabrics, which cannot achieve real customized care.

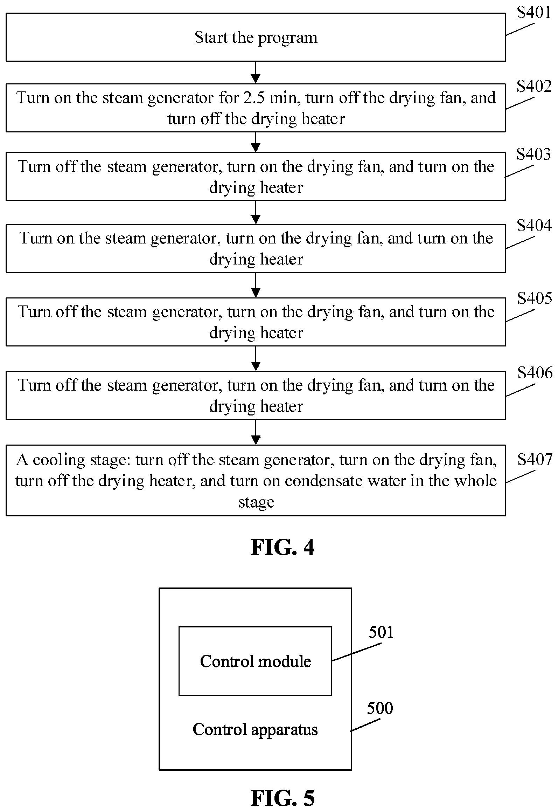

In view of the problem existed in the related art, an embodiment of the application provides a control method of a light dry cleaning program. FIG. 4 is a schematic flowchart of implementation of a control method of a light dry cleaning program according to an embodiment of the application. As shown in FIG. 4, the method includes the following operations S401 to S407.

At S401, the program starts.

At S402, the steam generator is turned on for 2.5 min, the drying fan is turned off, and the drying heater is turned off.

Here, the steam generator is turned on for about 2.5 min in advance, which may preheat the steam generator to generate a sufficient volume of steam to be introduced into the tub.

In the embodiment of the application, the steam generator is turned on in advance in a start-up stage of the program, and efficiency of the steam generator may be improved after it is preheated.

At S403, the steam generator is turned off, the drying fan is turned on, and the drying heater is turned on.

After the drying fan is turned on, the steam is blown into the tub, and the drying heater is turned on to reheat the steam, to reduce humidity of the steam and prevent wetting the clothes.

At S404, the steam generator is turned on, the drying fan is turned on, and the drying heater is turned on.

At S405, the steam generator is turned off, the drying fan is turned on, and the drying heater is turned on.

S404 and S405 are performed two times cyclically, and then the program proceeds to S406. During execution of the program, the steam generator is turned on and off repeatedly to achieve intermittent steam introduction, which may play a role of adjusting humidity and temperature in the tub, while achieve functions such as dust removal, wrinkle removal, deodorization, sterilization and other functions, to prevent introduction of excessive steam to wet the clothes or induce excessive pressure in the tub, thus resulting in air leakage.

At S406, the steam generator is turned off, the drying fan is turned on, and the drying heater is turned on.

Before the program finishes, the steam generator is turned off, and hot air circulation reduces humidity in the tub, to prevent problems such as excessive humidity in the clothes, or steam running out after opening the door, etc.

At S407, it is a cooling stage: the steam generator is turned off, the drying fan is turned on, the drying heater is turned off, and condensate water is turned on in the whole stage.

Condensate water is turned on in the whole cooling stage, to rapidly cool down and shorten time of the program.

By controlling the ON duration of the steam generator, temperature and humidity in the tub may be accurately controlled, and care may be customized for fabrics made of different materials, to achieve fine care for different types of fabrics. According to the method provided in the embodiment of the application, the steam generator is turned on intermittently during execution of the program, which may control temperature and humidity in the tub; hot air is introduced before cooling down according to the program, which may reduce humidity in the tub, ensure that dried clothes are obtained, and improve the clothes care effect.

Descriptions of an exemplary structure of a control apparatus provided in an embodiment of the application implemented as a software module are continued below. FIG. 5 is a schematic diagram of compositional structures of a control apparatus according to an embodiment of the application, the control apparatus is applied to the clothes treatment device shown in FIG. 2. As shown in FIG. 5, software modules in the control apparatus 500 may include a control module 501.

The control module 501 is configured to determine that the clothes treatment device performs a clothes treatment process, and control the clothes treatment device to operate in a predetermined mode.

The predetermined mode includes a first operation mode, and the first operation mode includes: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator.

In some embodiments, the first operation mode further includes: the tub body operating at a first beat.

The control module 501 is further configured to: control the tub body to operate at a first beat; and
determine that an ON duration of the steam generator reaches a first duration, and control the steam generator to be turned off to stop generating the steam.

In some embodiments, the predetermined mode further includes a second operation mode. The second operation mode includes: turning on the drying heater, turning on the drying fan, and turning off the steam generator.

In some embodiments, the second operation mode further includes: the tub body operating at a second beat.

The control module 501 is further configured to control the tub body to operate at a second beat which is stronger than the first beat.

In some embodiments, the predetermined mode further includes a third operation mode, and the third operation mode includes: turning on the drying heater, turning on the drying fan, turning on the steam generator to generate steam, and heating, by the drying heater, the steam to form superheated steam after the steam enters the drying tunnel via the steam outlet, and promoting, by the drying fan, the superheated steam to enter the tub body.

In some embodiments, the control module 501 is further configured to control the clothes treatment device to operate alternately in the second operation mode and the third operation mode.

In some embodiments, the control module 501 is further configured to control the clothes treatment device to operate in the second operation mode, after determining that the clothes treatment device operates alternately in the second operation mode and the third operation mode for a predetermined number of times.

In some embodiments, the predetermined mode further includes a fourth operation mode, and the fourth operation mode includes: turning off the drying heater, turning on the drying fan, turning off the steam generator, and turning on a condensate valve of the clothes treatment device.

It should be pointed out here that the above descriptions of the embodiments of the control apparatus are similar to the above descriptions of the method, and have the same advantageous effects as the method embodiments. Technical details which are not disclosed in the embodiments of the control apparatus of the application, may be understood by those skilled in the art with reference to the descriptions of the method embodiments of the application.

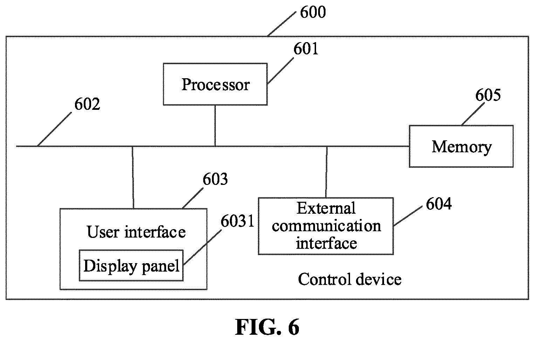

An embodiment of the application further provides a control device, the control device is applied to the clothes treatment device shown in FIG. 2. FIG. 6 is a schematic diagram of compositional structures of a control device according to an embodiment of the application. According to an exemplary structure of the control device 600 shown in FIG. 6, other exemplary structures of the control device 600 may be expected. Therefore, the structure described here should not be considered as limitation, for example, part of components described below may be omitted, or components which are not described below may be added to adapt to special requirements of certain applications.

The control device 600 shown in FIG. 6 includes a processor 601, at least one communication bus 602, a user interface 603, at least one external communication interface 604 and a memory 605. The communication bus 602 is configured to implement connection and communication between these components. The user interface 603 may include a display panel, and the external communication interface 604 may include a standard wired interface and a wireless interface. The processor 601 is configured to execute a program of the control method stored in the memory, to implement operations of the control method provided in the above embodiments.

An embodiment of the application further provides a computer-readable storage medium. In the embodiment of the application, when the above control method is implemented in form of a software function module and sold or used as an independent product, the above control method may be stored in a computer-readable storage medium. Based on such understanding, the technical solutions of the embodiments of the application substantially or parts making contributions to the related art may be embodied in form of a software product, and the computer software product is stored in a storage medium, includes several instructions to enable a computer device (which may be a personal computer, a server, or a network device, etc.) to execute the whole or part of the method described in each embodiment of the application. The foregoing storage medium includes various media capable of storing program codes, such as a U disk, a mobile hard disk, a Read Only Memory (ROM), a magnetic disk or an optical disk, etc. As such, the embodiments of the application are not limited to any specific combination of hardware and software.

Correspondingly, an embodiment of the application provides a computer-readable storage medium, having stored thereon a computer program. Operations of the control method provided in the above embodiments are implemented when the computer program is executed by a processor.

The above descriptions of the embodiments of the clothes treatment device and the storage medium are similar to the above descriptions of the method embodiments, and have advantageous effects similar to the method embodiments. Technical details which are not disclosed in the embodiments of the clothes treatment device and the storage medium of the application, may be understood with reference to the descriptions of the method embodiments of the application.

It should be understood that reference is made to "one embodiment" or "an embodiment" throughout the description, which means that specific features, structures or characteristics associated with the embodiment are included in at least one embodiment of the application. Therefore, appearances of "in one embodiment" or "in an embodiment" in various places throughout the description do not necessarily refer to the same embodiment. Furthermore, these specific features, structures or characteristics may be combined in one or more embodiments in any suitable manner. It should be understood that in various embodiments of the application, sizes of serial numbers of the above processes does not mean execution sequences thereof, and the execution sequence of each process should be determined by its functions and internal logics, and should not constitute any limitation to implementations of the embodiments of the application. Serial numbers of the above embodiments of the application are only intended for descriptions, and do not represent advantages or disadvantages of the embodiments.

It should be noted that terms "include", "including" or any other variants thereof here are intended to encompass non-exclusive inclusion, so that a process, method, article or apparatus including a series of elements not only includes those elements, but also includes other elements which are not explicitly listed, or includes elements inherent to such process, method, article or apparatus. Without any further limitation, an element defined by a phrase "including a..." does not preclude presence of additional identical elements in a process, method, article or apparatus including the element.

In several embodiments provided in the application, it should be understood that the disclosed devices and methods may be implemented in other ways. For example, the above device embodiments are only illustrative. For example, division of the units is only a logical function division. In an actual implementation, there may be other division manners. For example, multiple units or components may be combined or may be integrated into another system, or some features may be ignored or may not be performed. Furthermore, mutual coupling or direct coupling or communication connection among components as shown or discussed may be indirect coupling or communication connection through some interfaces, devices or units, and may be in electrical, mechanical or other forms.

The units described as separate components may be or may not be physically separated, and the components displayed as units may be or may not be physical units, that is, they may be located in one place, or may be distributed on multiple network units. Part or all of the units may be selected according to actual requirements, to achieve the purpose of the solutions of the embodiments.

Furthermore, each function unit in each embodiment of the application may be integrated into one processing unit, or each unit may be separately used as a unit respectively, or two or more units may be integrated into one unit. The above integrated unit may be implemented in form of hardware or in form of hardware plus software function units.

It may be understood by those of ordinary skill in the art that all or part of operations implementing the above method embodiments may be completed by hardware related to program instructions, the foregoing program may be stored in a computer-readable storage medium, and when the program is executed, operations including the above method embodiments are executed; and the foregoing storage medium includes various media capable of storing program codes, such as a mobile storage device, a ROM, a magnetic disk or an optical disk, etc.

Or, when the above integrated unit of the application is implemented in form of a software function module and sold or used as an independent product, the above integrated unit may be stored in a computer-readable storage medium. Based on such understanding, the technical solutions of the embodiments of the application substantially or parts making contributions to the related art may be embodied in form of a software product, and the computer software product is stored in a storage medium, includes several instructions to enable a product to execute the whole or part of the method described in each embodiment of the application. The foregoing storage medium includes various media capable of storing program codes, such as a a mobile storage device, a ROM, a magnetic disk or an optical disk, etc.

The above descriptions are only implementations of the application, however, the scope of protection of the application is not limited thereto. Any variation or replacement easily conceived by those skilled in the art within the technical scope disclosed by the application should be included in the scope of protection of the application. Therefore, the scope of protection of the application should be subjected to the scope of protection of claims.

### INDUSTRIAL APPLICABILITY

The embodiments of the application provide a control method, a control apparatus, a control device, and a computer-readable storage medium, which are applied to a clothes treatment device. The method includes the following operations. It is determined that the clothes treatment device performs a clothes treatment process, and the clothes treatment device is controlled to operate in a predetermined mode. The predetermined mode includes a first operation mode, and the first operation mode includes: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator. The steam generated by the steam generator may implement care functions such as dust removal, wrinkle removal, deodorization, sterilization and other care functions of the clothes in the tub body, which may effectively improve clothes shaping effect; furthermore, temperature of the steam generator may quickly increase by preheating the steam generator, to prepare for subsequent usage of the steam generator, thereby improving clothes treatment efficiency.

## Claims

1. A control method, applied to a clothes treatment device, comprising:
determining that the clothes treatment device performs a clothes treatment process, and controlling the clothes treatment device to operate in a predetermined mode,
wherein the predetermined mode comprises a first operation mode, and the first operation mode comprises: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator.

2. The method of claim 1, wherein the first operation mode further comprises:
controlling the tub body to operate at a first beat; and
determining that an ON duration of the steam generator reaches a first duration, and controlling the steam generator to be turned off to stop generating the steam.

3. The method of claim 1, wherein the predetermined mode further comprises a second operation mode,
the second operation mode comprises: turning on the drying heater, turning on the drying fan, and turning off the steam generator.

4. The method of claim 3, wherein the second operation mode further comprises:
controlling the tub body to operate at a second beat which is stronger than the first beat.

5. The method of claim 3, wherein the predetermined mode further comprises a third operation mode,
the third operation mode comprises: turning on the drying heater, turning on the drying fan, turning on the steam generator to generate steam, and heating, by the drying heater, the steam to form superheated steam after the steam enters the drying tunnel via the steam outlet, and promoting, by the drying fan, the superheated steam to enter the tub body.

6. The method of claim 5, further comprising:
controlling the clothes treatment device to operate alternately in the second operation mode and the third operation mode.

7. The method of claim 6, further comprising:
controlling the clothes treatment device to operate in the second operation mode, after determining that the clothes treatment device operates alternately in the second operation mode and the third operation mode for a predetermined number of times.

8. The method of claim 1, wherein the predetermined mode further comprises a fourth operation mode,
the fourth operation mode comprises: turning off the drying heater, turning on the drying fan, and turning off the steam generator,
the fourth operation mode further comprises: turning on a condensate valve of the clothes treatment device.

9. A control apparatus, applied to a clothes treatment device, comprising:
a control module, configured to determine that the clothes treatment device performs a clothes treatment process, and control the clothes treatment device to operate in a predetermined mode,
wherein the predetermined mode comprises a first operation mode, and the first operation mode comprises: turning off a drying heater of the clothes treatment device, turning off a drying fan of the clothes treatment device, turning on a steam generator of the clothes treatment device to generate steam, and the steam entering a tub body of the clothes treatment device by passing through a drying tunnel of the clothes treatment device via a steam outlet of the steam generator.

10. A control device, comprising:
a memory, configured to store executable instructions; and
a processor, configured to implement the method of any one of claims 1 to 8 when the processor executes the executable instructions stored in the memory.

11. A computer-readable storage medium, having stored thereon computer-executable instructions, the computer-executable instructions configured to implement the method of any one of claims 1 to 8 when the computer-executable instructions are executed by a processor.
